Europäisches Patentamt

European Patent Office

Office européen des brevets

(11) Publication number: **0 353 502**
**A2**

(12) **EUROPEAN PATENT APPLICATION**

(21) Application number: **89112709.4**

(22) Date of filing: **12.07.89**

(51) Int. Cl.⁴: **G11B 15/68 , G11B 23/28 , G11B 33/14**

(30) Priority: **14.07.88 IT 2136288**

(43) Date of publication of application:
**07.02.90 Bulletin 90/06**

(84) Designated Contracting States:
**AT BE CH DE ES FR GB GR IT LI LU NL SE**

(71) Applicant: **Industria Grafica Meschi S.r.l.**
**Via Plan di Rota, 2**
**I-57100 Livorno(IT)**

(72) Inventor: **Meschi, Luciano**
**Corso Amedeo 73**
**I-57100 Livorno(IT)**

(74) Representative: **Dragotti, Gianfranco**
**SAIC BREVETTI s.r.l. Viale Bianca Maria, 15**
**I-20122 Milano(IT)**

(54) **System and apparatus for automatic management of texts recorded on magnetic tapes, or the like, in a safety room protected against damaging or destructive events.**

(57) System and apparatus for automatic management of recorded texts in a safety room consisting in a protected chamber (60) containing shelves (72-90), housing texts supports movable within said chamber for example on rails (100), said chamber having an expansion space for said shelves with the size of at least one space occupied by one thereof, and containing at least a carriage (94) provided with at least a mechanical arm(96) for carrying cassettes of recorded texts from said shelves (72-90) to reading and/or recording stations (102, 104), inside of said protected chamber (60), connected with equipment (130-144) put outside of said chamber (60)

Fig.1

EP 0 353 502 A2

# System and apparatus for automatic management of texts recorded on magnetic tapes, or the like, in a safety room protected against damaging or destructive events.

Present invention regards a system and an apparatus for automatically stroring and managing a store of texts recorded on suitable supports, such as magnetic tape cans or cassettes, or similar recording means, in a safety room protected against damages and destructions and, specifically, regards the size optimization of the necessary spaces for said storing and protection.

The management of said recorded tape cans or cassettes, and thus of the data therein contained, is a problem for enterprises having to manage a large number of them.

As this kind of enterprise must manage a number of cassettes, which can be of the order of 20.000 or more, it derives a need for totally automated stores, search, picking-up and reading of said cans or cassettes.

This need must solve two problems of which the first one regards the automatic management of said cans or cassettes and the second one regards the protection thereof against possible damages or destruction due both to human actions, such as handling mistakes, sabotages, or hooliganisms, and to accidentals events, such as fires, floods, earthquakes, or the like.

A first kind of protection against misuses and accidental losses of texts recorded on magnetic cassettes, or the like, was enclosing a whole computer or processing center in specially protected and strong rooms, provided with a series of defenses and protections against both damaging or criminal human interventions and accidental or natural events either damaging or destroying.

Such a first kind of protection is extremely expensive and engaging because these rooms must be provided, further to the protection and the defense, also with a good habitableness by the computer operators, which implies a series of additive facilities and services, such as sanitaries, air conditioners, etc., raising the cost of said rooms to such a high level to be justified just in extremely large computer centers, or by the importance intended for their protection.

A second kind of protection against misuses and accidental losses of said registered texts was to store spare copies of said texts in particularly guarded and protected rooms, usually located in places well different and far from the place where said texts are usually stored and managed, in order to be able to use them, as spare data, in case of said misuses or losses, to recover them as a whole.

Also this kind of protection in particularly expensive owing to the watching for said rooms and does not offer a particularly high safety against natural or accidental calamities, such as fires, floods or earthquakes, unless to the room watching a particular protection, through armor plating, thermal insulating, watertight doors, and the like, is added.

A third and simpler however so efficent, kind of protection against human interventions is provided by automating all cassette withdrawal, loading and storing processes, while the protection against accidental and natural events is provided by putting the whole cassette store, with reading devices and automatic management devices, into protected chambers or "strongrooms" protecting against every calamity.

Of course the space occupied by said strongrooms has a cost raising in a way well faster than the simple proportion with the raise of the protected space.

Thus an object of presente invention is to optimize this space in order to obtain the maximum number of services in the minimum space the possible.

Another object of present invention is to provide an apparatus to be emploied in said automated management which, in case of calamity, can save from definite loss at least all that portion of a text storage whose loss would be irremediable.

Presente invention form two statements: first, among the components of a text store, those of which the saving cannot absolutely be given up, are the records of the texts on their supports, such as for example records on magnetic tape cassettes, because while all the other components can be replaced with equivalent components, after a destruc tion thereof, the text records are not replaceable, or are réplaceable with extreme difficulty, so that their loss can be an irremediable or a very unlikely remediable damage.

Second, if the shelves containing said records supports are held stationary, one is compelled to add to the spaces occupied by them many other supplementary spaces for the passage of equipments carrying the records from the shelves to the reading and/or recording equipments and viceversa, further to supplementary service spaces to allow the access to service personnel, while if said shelves are made movable, the supplementary spaces can be reduced simply to the space occupied by one or two shelves plus an addition of the spaces strictly necessary for the access of service personnel, which however can in a good part coincide with said supplementary space equivalent to that occupied by one or two shelves.

It is preferred that these supplementary spaces, or expansion areas, be equivalent to those occupied by two shelves for reasons of operative reliability, as it will be herebelow explained in detail, Briefly stated, present invention consists in a chamber of "strongroom" suitally provided with access openings of the safety kind, difficult to force open, and with equipments for connection and information exchange with the outside, equipped to resist against damaging and/or destronging events both of human and accidental or natural kind such as for example an armored thermally insulated and provided both with water tight doors and event stopping members such as fire stopping walls or the like, embodied with materials and according to antiseismic directions or the like, to allow the safest the possible store of texts in its inside, said chamber being used for housing cabinets or shelves containing recorded texts to be stored and managed, characterized in that said shelves are each other movable in order to occupy in turn at least a service space, used as expansion space having size substantially equivalent to that of one of said shelves, for moving said recorded texts from said storge shelves to reading and/or recording stations suited to the nature of said recorded texts.

Particularly the movement of said shelves occurs according to criteria allowing to open a passage or movement way for said texts between said reading and/or recording stations and every side of any shelf.

More particularly, said service space has size equivalent to that of at least two shelves to allow the opening of a passage or movement way for said texts between said reading and/or recording stations and every side of any shelf, even if one of said shelves remains immobilized because of misfunctions.

Preferably, said recorded text storing shelves are of parallelepipedal shape with two mayor surfaces vertically arrangeed for housing a compartment assembly to contain recorded texts, for example magnetic tape cassettes anyone housed in one of said compartments, the shelves are each other side by side arranged by superimposing their major faces, so that the space occupied by the totality of said shelves is reduced to a minimum given by the addition of the volumes of the single cabinets or shelves plus two shelf volumes for services or expansion spaces, used for housing moving shelves, in order to allow said movement of texts recorded on cassettes between their storage places and said reading and/or recording stations.

More preferably, said side-by-side arranged shelves are mounited on wheels running on at least two parallel rails to allow an easy movement od said shelves.

According to a preferenced embodiment, the single shelves connected to moving means in order to be moved along said rails, are disegageable therefrom to remain fixed, in case of a misfunction, and the remaining shelves can be moved in order to obtain the accessor to all their faces. Preferably, said moving means consist of chains or cogged belts moved by sprockets or gears, driven by at least an electric motor provided with engaging means for driving one or more shelves to the desired locations. Still more preferably, said moving means are driven by two electric motors of which one is operating and the other is left idle rotating, however ready to take the operation of the first one if it would misop erate.

According to a preferred embodiment, the movement of said texts in cassettes, from the shelves to the reading and/or recording equipments occurs by means of arms provided by means of a carriage, along slides fastened to the ceiling of the chamber or strongroom in which said texts are housed.

More preferably, said slides are tracks or lines provided with switches for addressing the carriages of said arms according to coordinates identifying the deired text and the desired reading and/or recording station.

The features and the advantages of present invention will be better appreciated from the following detailed description of an embodiments and situations thereof provided with the enclosed drawing wherein:

figure 1 is a diagrammatic upper plan view of a protected chamber or "strongroom" embodied according to the prior art;

figure 2 is a diagrammatic upper plan view of a protected chamber or "strongroom" embodied according to the invention;

figure 3 is a prospectical view of a container or box able to contain twenty cans or cassettes of recorded texts, such as magnetic type cans;

figure 4 depictes a prospectical view of a shelf assembly containing boxes according to figure 3, free to move along a rail fastened to the floor of the protected chamber, as depicted in figure 2;

figure 5 depicts, in a reduced and simplified way, a cabinet and shelf assembly in a protected chamber according to present invention providing for at least an expansion chamber;

figure 6 depictes, in a diagrammatic way, the movement of a drawing arm between cabinets or chambers and reading and/or recording equipments in the case of a protected chamber of the kind of figure 5;

figure 7 diagrammatically depictes a protected chamber according to the invention provided with spaces for the shelves as well as with service spaces and two expansion spaces or areas to allow the movement of said cabinets or shelves with higher reliability;

figure 8 to 11 depict the many arrangements to be taken by the cabinets or shelves in a chamber, such as that of figure 7 to allow the access to anyone of them even in the case in which one of said shelves (particularly the second one) remains locked owing to a misfunction;

figure 12 depictes a system for moving shelves along their rails using two driving motors, of which one is on service and the other one is held in stand by leaving it idle;

figure 13 depictes the same system of figure 12 in which the two left cabinets shelves have been moved together to allow the introduction of an arm for drawing texts from one of the cabinets or shelves adjacent to the moved portion;

figure 14 diagrammatically depictes a flow chart for the managment and the movement of shelves and the transfer of recorded text cassettes therein contained, from the shelves to the reading and/or recording equipments and viceversa.

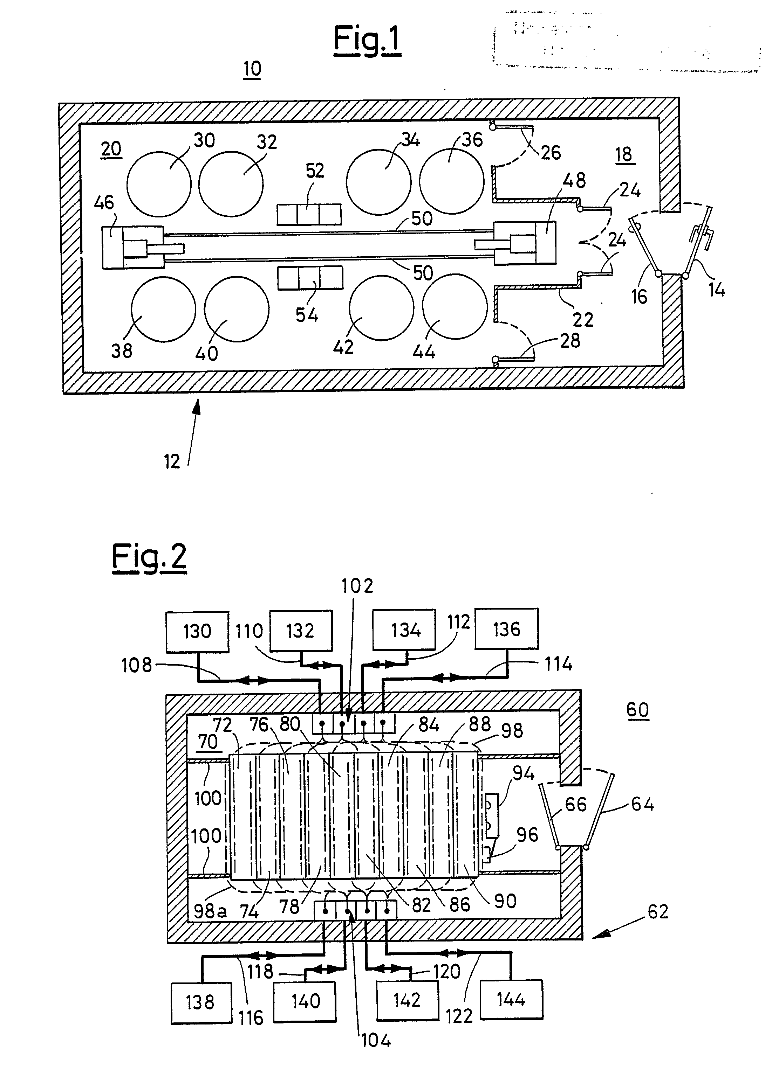

Referring to figure 1, it is seen that a typical protected chamber 10 of the prior art consists of a fort building having safety walls 12 formed, for example by concrete coated with possible armors and thermal insulating layers, provided with an external safety door 16, possibly also watertight, allowing the access to an anteroom or vestibule 18 for possible operators, servicing and repairing people, before a true store 20, closed by a dividing wall 22, provided with doors 24, 26 and 28 for access to service spaces, in which are stored shelves 30-44, for example of column or circular turnable stand, housing recorded texts such as magnetic type cassettes, which can be carried by carriages with drawing arms 46 and 48, movable on a track 50 to reading and/or recording equipments 52 and 54.

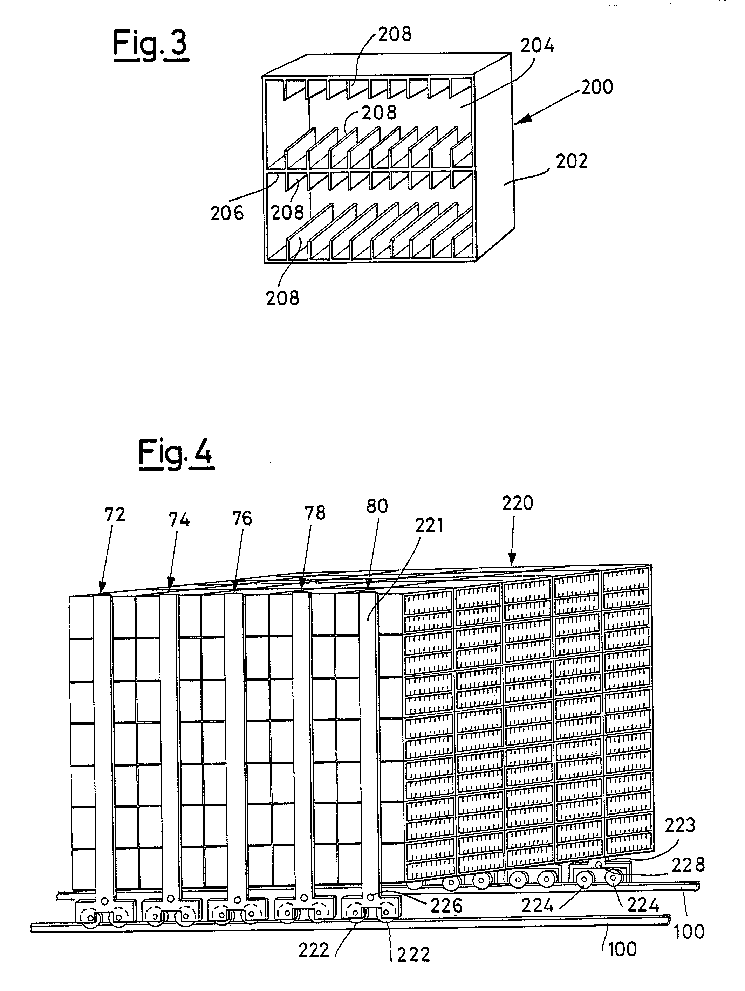

Referring to figure 2, it is seen that a protected room 60 according to the present invention, consists in a fort building having safety rooms 62 formed for example, by concrete coated by possible armors and thermal insulating layers, provided with an external safety door 64 and a possible internal safety door 66, possibly also watertight, allowing access to a store 70 in which are kept rectangular shelves 72-90 arranged for housing within proper boxes, shown in detail in figure 3, cassettes of record supports for the texts to be handled and protected.

The cassettes contained in said shelves 72-90 can be drawn from then by means of a carriage 94, provided with drawing plier arm 96, movable on slide means 98 and 98a, consisting of roof rails, and inserting in reading and/or recording stations 102 and 104, consisting of motor means and readingand/or recording heads, connected through lines 108-122 to reading and/or recording equipments 130-144 outside of the protectded chamber, because said equipments 130-144 are completely replaceable in case of damage or destruction.

Of course in the protected chamber 60 can be installed just one reading and/or recording station connected to related external equipments 130-136 or 138-144.

A box 200 of a known container, usually in plastic material, used for containing magnetic tape cassettes, or the like for example twenty cassettes, is provided with lateral walls 202 with a bottom wall 204, with complete dividing wall 206 and separating partial walls 208 delimitating the spaces housing any single cassette.

The containers or boxes can be connected to frames in order to form shelves, such as the shelves 72-80 shown in figure 4.

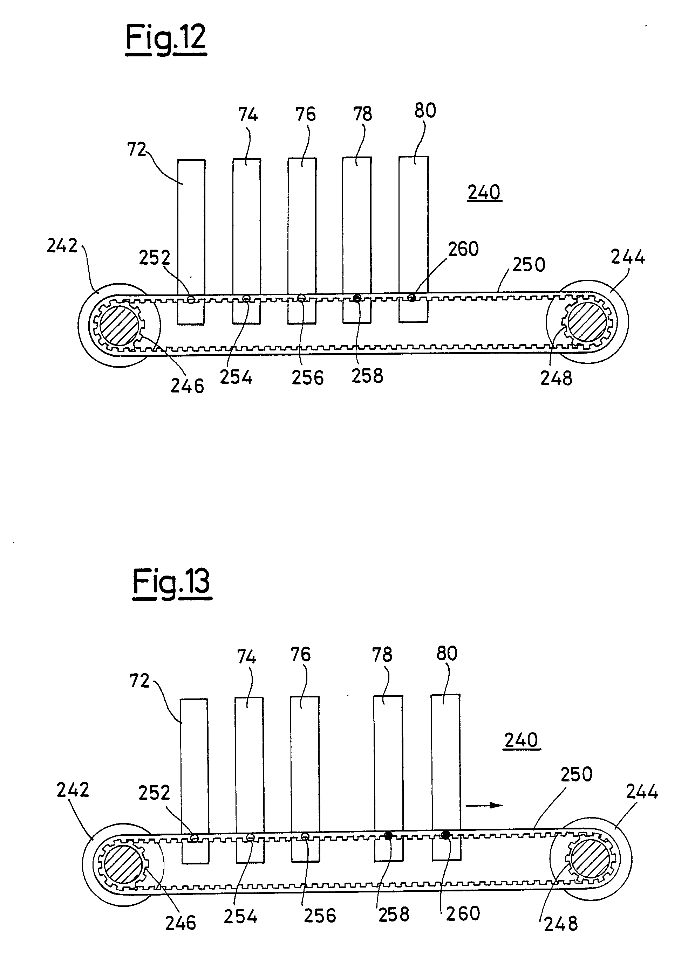

Considering as an example the shelf 80, which is more visible in figure 4, said shelf is formed by a raster 220, comprising two vertical up rights 221 and 223 preparly connected for housing the boxes 200 of figure 3, assembled on weel pairs 222 and 224 movable along rails 100, said up rights being provided with coupling holes respectively 226 and 228 housing pins driven for example by electromagnetic means and connected to a belt or chain expected for moving one or more rasters of said shelves 72-80 (see particularly figures 12 and 13).

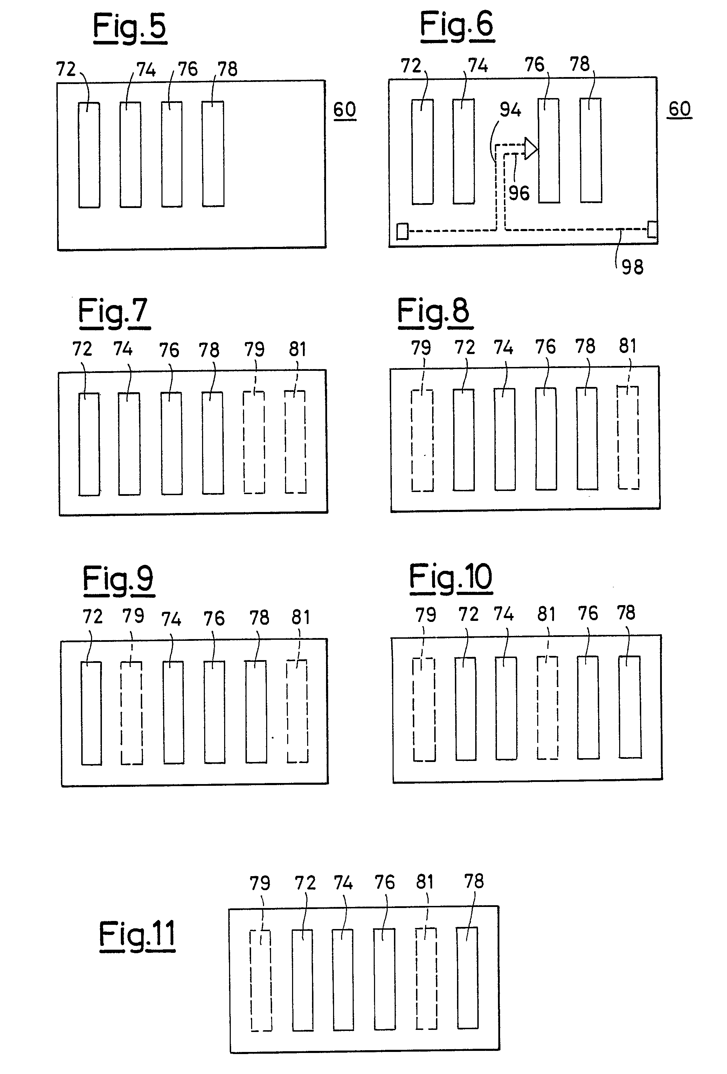

Figure 5 shows in a simplified way a four shelves arrangement 72-78 within a protected chamber 60. As it is here recognized, the shelves 72-78 are parallel aranged and occupy a portion, however the main portion of the internal space of the protected chamber 60.

As it is particularly depicted in figure 6, to allow to the left side of the shelf 76, it is sufficient to space apart each other the shelves 74 and 76 for having a large enough space for introducing the carriage 94 with the related drawing arm 96 which goes to an intended position on the left side of the shelf 76 corresponding to the coordinates of the desired cassette, said carriage 94 being able to move on slides, such as the rails 98, for carrying a cassette from said shelf to reading and/or recording stations and viceversa. All shelf and shelf side selection data as well as cassette coordinates are provided by control signals controlling the arrangements of the shelves, the carriage 94 and the drawing arm 96, respectively.

Of course, such a protected chamber, having such a reduced volume, must be provided with many safety provisions to allow a proper working of the system according to the invention even in case of troubles both to shelf moving means, and to the carriage or carriages and their drawing arms. These provisions must introduce a high redundancy rate in the equipments so that the system can tolerates troubles and misfunctions i.e. it can work well enough, even if there are one or more breakdowns; at the price of some maneuvre complication.

To meet the above mentioned redudancy conditions, it need insert at least:

1) two carriages provided with drawing carriages for carrying all the operations even with a carriage and/or an arm out of order;

2) one or more expansion space with respect to the at least one space strictly sufficient to allow the movement of the shelves, in order to allow the working of the system with a shelf out of order and thus unable to move. Of course if the extension spaces were more than two (for example three) the system could work also with more shelves out of order (for example two). As a general rule, the number of cabinets or shelves out of order tolerated by the system is one unity less than the number of expansion spaces available in the protected chamber;

3) two motors giving movements to the shevels of which one is always working anf and other one is trailed 'idle", beginning to work just when the first motor is out of order and cannot any more move the shelves.

Referring to figure 7 and 8 to 11 it is seen how the presence of two service spaces 79 and 81 in addition to four shelves 72-78 make the system tolerant to misfunction locking of one of said shelves.

In fact, let suppose that the shelf 74 be in trouble so that it cannot any more automatically moved. In order to make the system still completely working even with this shelf out of order, it is sufficient to move the shelves to the right for one position (of course the working shelves can be moved automatically, while the shelf out of order will have to be moved by hand) and fasten the shelf out of order in its working position, as shown in figure 8, wherein the service space 79 is at the extreme left while all shelves 72-78 are shifted right by one space.

From the analysis of figures 8-11 it is seen that it is possible to approach all sides of the shelves 72-78, comprising the shelf 74 out of order. In fact with the shelves arranged as in figure 8, it is possible to approach the left side of the shelf 72 and the right side of the shelf 78 lmeaving the respective service spaces 79 and 81 the approach ways for the carriage or carriages provided with drawing arms.

With the shelves arranged as in figure 9, the service space 79 allows approach to the right side of the shelf 72 and to the left side of the shelf 74, which being out of order, has been hand carried to its working position and there locked, while the service space 81 still allows an approach to the right side of the shelf 78. With the shelves arranged as in figure 10, the service space 79 allows an approach to the left side of the shelf 72, while the service space 81 allows an approach to the right side of the shelf 74 and to the left side of the shelf 76, and aventually, as in figure 11, the service space 79 allows an approach to the left side of the shelf 72 and the service space 81 allows an approach to the right side of the shalf 76 and to the left side of the shelf 78. Of course other arrangements are possible, with the shelf 74 locked, as for example the service space 79 between the shelves 72 and 74 to allow approaching the right side of the first one and to the left side of the second one and the service space 81 between the shelves 74 nad 76 to allow an approach to the right side of the first one and to the left side of the second.

In conclusion, the availability of two service space 79 and 81 makes possible the approach to any side of the shelves contained in the protected hamber even with a locked shelf indipendently from the number of shelves present therein.

As depicted in figures 12 and 13, the movement of the shelves into the protected chamber is provided by moving means 240 comprising at least two electric motors 242 and 244 driving, through respective gears 246 and 248, transmitting means 250, such as a chain or a coggett belt, which can carry the shelves 72-80 to left or to the right, by means of stopping members 252-260, such as pins controllably insertable in corresponding holes, such as the coupling holes 226 and 228 depicted in figure 4, present in the base of the frames of shelves 72-80. Particularly in figure 12 the engaging members 252, 254 and 256 are depicted as disengaged and the engaging members 258 and 260 are depicted as engaged, i.e. with their pins, engaged in the coupling holes of the frames of the shelves 78 and 80, so that owing to the drive of one of the motors, for example the motor 242, moving the transmitting means 250 to the right, the shelves 78 and 80 are moved to the right for example by a space corresponding to the size of a shelf as depicted in figure 13.

The two figures 12 and 13 show two motors 242 and 244 for providing the movement of the transmitting means 250 because, to meet the redendancy condition, one of the motors is working and the other one is left turning idle ready to begin to work if the first one goes out of order.

The functions of drawing a given cassette from its shelf, carrying it to one of the reading and/or recording equipments or stations (also known as a driver) and return it in the prope location within the shelf, after the reading assisted by how also many controllers how many are the components to be moved, such as in this connection the assembly of shelves, carriages and drawing arms, which operates according to a program intended to control the above mentioned function.

After that the computer selected the cassette to be drawn and thus operated in order to obtain, through a first controller, the operating space between two adjacent shelves 72-90, wherein it is contained, by means of another controller moves the carriages 94 with the mechanical arm 96 in order to be able to draw said cassette. The carriage 94 of the mechanical arm 96 is guided by a truck 98, 98a over said shelves 72-90 and perpendicular with respect to them; it is moved back and forth to reach the space open between adjacent shelves, then the prehensile mechanism arranged in the and portion of the arm 96 (mechanical hands or pliers) is indexed toward the side of the shelf when the cassette is housed and subsequently, by means of coordinates x and y , said mechanism is guided to the selected cassette.

By means of sensors, possibly also optical and tracing, the mechanism approaches the cassette, which is catched by the arm, which will bend up, travel on the track to one of the reading and/or recording stations 102 or 104, will move the "hand" for the introduction of the cassette in the housing of the reading and/or recording driver.

For safety reansons, of course, will be used more than one arm 96 for every shelf assembly.

In the case of only two arms for each shelf assembly they can work each other indepently on two different tracks 98, 98a, or in case of misfunction of one of them, the working load can be carried out by the other working arm.

In the case of more than two arms for every shelf assembly, they can be interchangeable, can lie all just to rails and their movement along the rails can occur by means of switches (or points) similar to the switches (or points) used for railways.

The managing program takes into account all the effected drawings recording both the code of the tape and its location in the shelf, so that, af ter the reading, anyone of the mechanical arms can run over the travel and bring back the used tape to the start location.

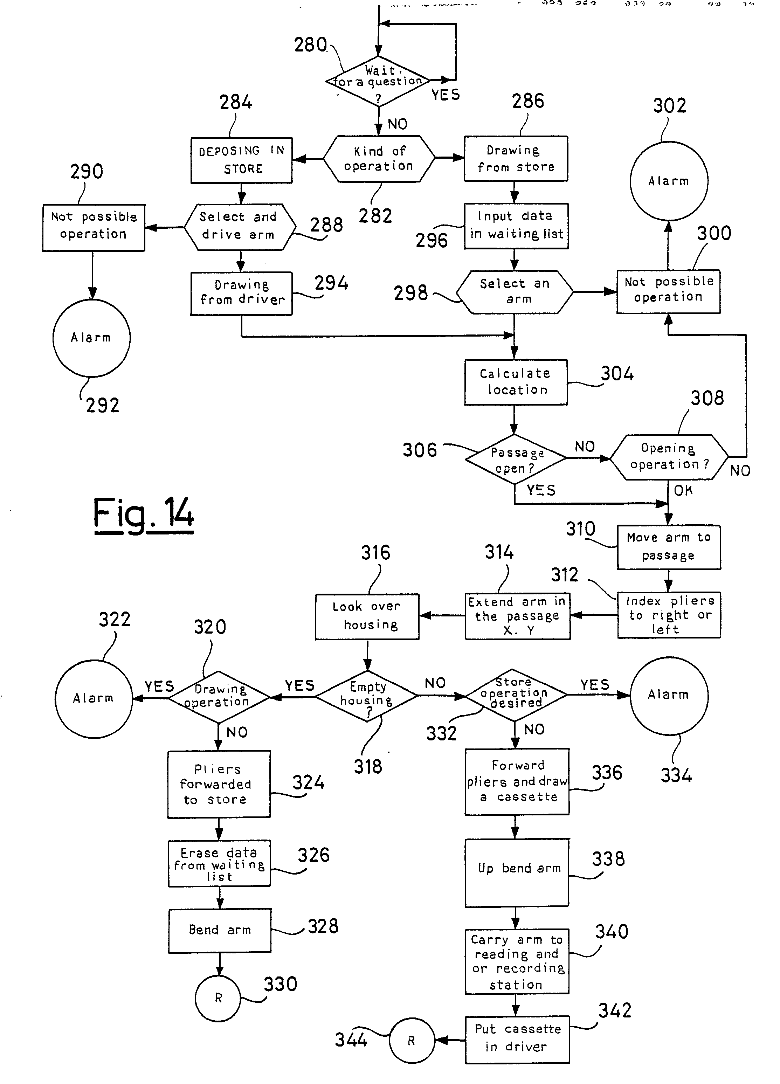

In figure 14 is reported the flow chart of the operations of selection, drawing, readily and bringing back of a cassette or tape.Referring to said flow chart of figure 14, it is seen that the program is at the beginning, in the block 280 of wait for a question and there remains till it is therefrom removed by a decision 282 selecting the kind of operation which could be either a deposition 284 in store 284 or a drawing from store 286. Should the operation be a deposition in store 284, it is choosed what carriage 94 with the attending arm 96 is to be used, how shown in block 288, and said carriage is driven to one of the reading and/or recording drivers. Now the operation could be impossible, how shown in the block 290, and thus the emission of an alarm signal 292 is operated. On the contrary, if the operation is possible, the drawing of the cassette from the driver is begun, as shown by the block 294.

If the decided operation is drawing from store, as specified in the block 286, identification data of a cassette to be drawn are inputted in a waiting list, as indicated by the block 296, and a drawing arm is choosed, as indicated in the block 298. If the operation is impossible, as indicated by the block 300, an alarm 302 is operated if on the contrary, the operation is possible, the location of the cassette in the store is calculated, as indicated in the block 304, what must occur also in the case of drawing from a driver.

In the block 306 is checked if a passage among the shelves has been already open by means of the operation of one of the motors 242 and 244 and some of the engaging members 252-260 on the transmitting means 250 (see figures 12 and 13).

If the passage has not been open, an opening operation 308 is begun. If said operation is impossible because it is attempted to move some shelf to not reachable positions, for example either beyond the walls of the protected chamber 60 (see figure 2), or because some shelf cannot move owing to misfunctions, it is to come back to the block 300 of impossible operation and to the alarm 302.

If, on the contrary, the passage is already open or it has been possible to begin the opening operation of said passage it is provided to move of one of the arms to the passage, as indicated in the block 310, and to index the pliers to the right or to the left side, as indicated in the block 312.

As the carriage 94 with the arm 96 reached the open passage and the pliers have been intexed to the desired side (right or left), the arm 96 is extended into the passage, as indicated in the block 314 and some sensors thereon, and particularly on the pliers, look over a housing in the selected shelf, as indicated in the block 316.

The signals coming from said sensor indicate if the housing is empty or occupied, as indicated in the block 318. If the housing is empty, it is to ask if a drawing operation is requested, as indicated in the block 320. If said drawing operation is desired, then begins to operate the alarm 322 to indicate that, as there is an empty housing, the order is wrong. If the drawing operation is not desired the pliers are further forwarded to the housing and store there the cassette, as indicated in the block 324. If the cassette has been stored in the housing, the data thereof are erased from the waiting list, as indicated in the block 326 and the bending of the arm 96 of the carriage 94 is indexed, as indicated in the block 328 and the program is returned to the beginning, as indicated in the block 330.

If the housing is occupied, it is to ask if a store operation is desired, as indicated in the block 332.

If said store operation is desired, then begins to operate the alarm 334 to indicate that as the housing is occupied, the order is wrong. If, on the contrary, said store operation is not desired it is provided forwarding the apliers to the housing and drawing out the present cassette, as indicated in the block 336.

As the cassette has been drawn, the arm 96 is up bent, as indicated in the block 338 and the carriage 94 begins the movement to carry said cassette into the selected reading and/or recording station, as indicated in the block 340. When the cassette has been put in the selected driver, as indicated in the block 342, the program is returned to the beginning as indicated in the block 344.

What has been hereabove disclosed described a preferred embodiment of the invention to which can be given many obvious changements and alterations regarding chiefly the shelf number and the number of expansion spaces contained in the protected chamber, as well as, the number of carriages with their arms and the number of tracks or lines driving the carriages between the shelves and the reading and/or recording stations wherein the drivers are present. Accordingly, all said obvious changements and alterations must be considered covered in the appended claims.

## Claims

1. System and apparatus for the automatic management of recorded texts in a safety room consisting in a protected chamber or "strongroom" (60) properly provided with access opening of the safety kind, difficult to be broken, and with equipments for the communication and information exchange with external rooms, equiped to withstand damaging and/or destroying events both of human and accidental or natural kind, such as an armored chamber thermally insulated and provided both with waterthight doors and with event stopping members, such as fire cut walls, or the like, made with materials and according to antiseismic directions , or the like, to allow the safets the possible store of texts therein said chamber being used for housing cabinets or shelves (72-90) containing recorded texts to be stored and managed, characterized in that said shelves (72-90) are movable with respect to each other in order to occupy in turn at least a service space, used as an expansion space, having size substantially equivalent to that of one of said shelves, to move said recorded texts from said storage shelves (72-90) to reading and/or recording stations (102-104) inside said protected chamber (60) and suited to the nature of said recorded texts.

2. System and apparatus, according to claim 1, characterized in that the movement of said shelves occurs according to criteria allowing to open a passage or mevement way for said texts between said reading and/or recording stations (102-104) and every side of anyone of said shelves (72-90).

3. System and apparatus, according to claim 2, characterized in that said service space has size similar to that of at least two shelves to allow to open a passage or movement way for said texts between said reading and/or recording stations (102-104) and every side of anyone of said shelves (72-90), even if one of said shelves remains locked by some misfunction.

4. System and apparatus, according to claim 1, characterized in that said shelves (72-90) storing said recorded texts are of parallelepipedal shape with two major surfaces arranged vertically for housing a compartment assembly (200) housing recorded texts, for example magnetic cassettes housed anyone into one of said compartments (200), the shelves are each other side-by-side arranged by superimposing their major surfaces so that the space occupied by all said shelves is at a minimum given by the addition of the volumes of the single cabinets or shelves plus two shelf volumes for service and expansion spaces, for housing moving shelves, to allow said movement of texts recorded on cassettes between their storage positions and said reading and/or recording stations (102, 104).

5. System and apparatus, according to claim 4, characterized in that said side-by-side arranged shelves (72-90) are mounted on wheels running on parallel rails (100) to allow an easy movement of said shelves.

6. System and apparatus, according to claim 5, characterized in that any shelf (72-90) connected to moving means (240), to make them move along said rails (100), are controllably disengaged therefrom to be maintained fixed, in case of misfunction, and the remaining shelves can be moved in order to obtain the access to all the faces thereof.

7. System and apparatus according to claim 6, characterized in that said moving means (240) consist of chains or coggett belts (250) moved by sprockets or gears (246, 248) driven by at least an electric motor(242, 244) provided with engaging means (252-260) driving one or more shelves (72-90) in the desired position.

8. System and apparatus, according to claim 7, characterized in that said moving means are driven by two electric motors (242-244) of which a first one is working and the other one is running idle, however ready to work instead of the first one, should it go out of order.

9. System and apparatus, according to claims 4 to 8 characterized in that the movement of said cassette texts from the shelves (72-90)to the reading and/or recording equipments occurs by means of arms (96) provided with plyers and movable, by means a carriage (94), along tracks (98, 98a) placed in the protected chamber or stronroom in which the texts are stored.

10. System and apparatus, according to claim 9, characterized in that said rails (98, 98a), placed in the protected chamber or strongroom, are secured to the floor.

11. System and apparatus, according to claim 9, characterized in that said tracks (98, 98a), placed in the protected chamber or strongroom, are secured to the ceiling.

12. System and apparatus, according to claims 9, 10 and 11, characterized in that said tracks (98, 98a) consist of tracks or lines provided with switching means to address the carriages (94) of said arms (96) according to coordinates indicating the desired text and the desired reading and/or recording station (102, 104).

# Fig.1

# Fig.2

Fig. 3

Fig. 4

Fig.5

Fig.6

Fig.7

Fig.8

Fig.9

Fig.10

Fig.11

## Fig.12

## Fig.13

## Fig.14